# DEMANDE DE BREVET EUROPEEN

(11) **EP 0 646 893 A1**
(43) Date de publication de la demande: **05.04.1995**
(21) Numéro de dépôt: 93402448.0
(22) Date de dépôt: 05.10.1993
(51) Int. Cl.: G06K 19/077, G07F 1/06

(54) **Jeton de paiement électronique anti-fraude et procédé de fabrication**

(71) Demandeur: GEMPLUS S.C.A., F-13420 Gemenos (FR)
(72) Inventeur: Nicolai, Alain, Cabinet Ballot-Schmit, F-75116 Paris (FR); Orus, Hervé, Cabinet Ballot-Schmit, F-75116 Paris (FR); Fidalgo, Jean-Christophe, Cabinet Ballot-Schmit, F-75116 Paris (FR); Bertrand, Pierre, Cabinet Ballot-Schmit, F-75116 Paris (FR)
(74) Mandataire: Schmit, Christian Norbert Marie

(57) **Abrégé**

L'invention concerne un jeton de paiement électronique principalement caractérisé en ce qu'il comporte un circuit électronique à lecture sans contact (3, 4) et un ensemble de pièces mécaniques (2, 5, 6) composé de matériaux de natures différentes de façon à assurer une tenue mécanique au jeton, une protection physique du circuit et la lecture sans contact du circuit. Elle concerne également un procédé de la fabrication du jeton électronique.

Application au paiement électronique.

## Description

L'invention concerne un jeton de paiement électronique anti-fraude et son procédé de fabrication. On connaît déjà des dispositifs de paiement électroniques tels que les cartes à puces. On peut définir deux types de cartes à puces permettant de réaliser des paiements :
- les cartes à pré-paiement sur lesquelles des unités sont consommées à chaque utilisation. Ce principe a été largement utilisé pour des paiements d'unités téléphoniques dans des cabines publiques équipées de lecteurs de cartes.
- les cartes du type carte de crédit qui permettent d'identifier le porteur et de faire débiter son compte à partir de tout magasin disposant d'un lecteur de carte approprié.

On constate que les cartes à pré-paiement ne sont utilisables que pour des applications particulières et que les cartes du type carte de crédit entraînent des coûts d'exploitation trop élevés pour les petites sommes.

De plus de nombreuses machines n'acceptent encore que les pièces de monnaie ou des jetons achetés d'avance.

On sait que les pièces de monnaie ont une signature magnétique qui permet de lutter contre les "faux". En revanche il est généralement plus facile de fabriquer des faux quand il s'agit de jetons.

La présente invention permet de remédier à ce problème. Elle a pour objet un jeton de paiement électronique principalement caractérisé en ce qu'il comporte un circuit électronique à lecture sans contact et un ensemble de pièces mécaniques composé de matériaux de natures différentes de façon à assurer une tenue mécanique au jeton, une protection physique du circuit et la lecture sans contact du circuit.

L'invention concerne également un procédé de fabrication d'un jeton de paiement électronique principalement caractérisé en ce qu'il comporte les étapes suivantes :
- Elaboration d'une couronne métallique;
- Elaboration de deux flasques en matériau plastique;
- Mise en place du circuit électronique sur l'une des flasques;
- Dépôt d'une goutte de résine sur le circuit;
- Mise en place de la deuxième flasque;
- Solidarisation de l'ensemble des pièces.

D'autres particularités et avantages de l'invention apparaîtront à la lecture de la description qui est donnée à titre illustratif et nullement limitatif et faite en regard du dessin sur lequel :
- la figure 1 représente une coupe longitudinale du jeton selon l'invention.
- la figure 2 représente une coupe transversale du jeton selon l'invention.

L'invention concerne le jeton électronique et son procédé de fabrication.

Un objet de l'invention est donc de réaliser un jeton électronique 1 porteur d'une information susceptible d'être lue automatiquement. L'utilisation d'un tel jeton sera recherchée pour lutter contre des fraudes par imitation des jetons dans l'usage de machines à sous ou tout autre appareil utilisant des jetons ou des pièces de monnaie. On parlera dans toute la suite de jeton étant bien entendu qu'il pourra s'agir de jeton ou de pièces de monnaie selon l'application.

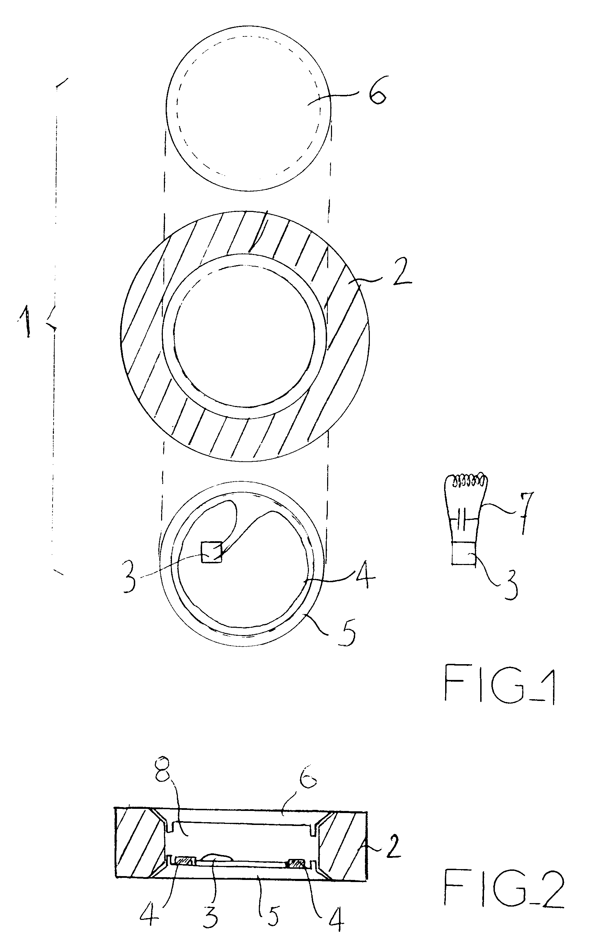

On pourra se reporter aux schémas des figures 1 et 2 pour la suite de la description.

Le jeton électronique 1 objet de l'invention est constitué d'un ensemble de pièces 2,5,6, assemblées de façon à assurer une tenue mécanique au jeton et la protection physique du circuit électronique 3 et 4 placé dans le jeton.

Ce circuit électronique permet l'identification du jeton, c'est à dire qu'il est porteur d'une information caractéristique pouvant être contrôlée de manière à vérifier l'authenticité du jeton.

Le circuit électronique permettant l'identification du jeton comporte un circuit intégré 3 de mémorisation de l'information caractéristique et des moyens du type émetteur/récepteur 4 permettant d'accéder à cette information sans contact.

Les moyens d'accéder à l'information caractéristique sans contact comportent, selon une réalisation préférée, une antenne constituée par une simple bobine 4 ou, selon un autre mode de réalisation, par un circuit oscillant 7. Dans le cas d'un circuit oscillant il sera possible d'accéder à l'information caractéristique à une distance éloignée (une dizaine de centimètres) alors que dans le cas de la simple bobine cette distance sera beaucoup plus courte (quelques millimètres) car l'accord en fréquence n'est pas pleinement obtenu avec la bobine d'inductance seule. La simple bobine est utilisée par exemple pour les machines à sous dans lesquelles le jeton peut être guidé de façon précise à proximité d'un moyen de lecture sans contact du jeton.

La lecture se fait par un lecteur sans contact (non représenté), apte à envoyer un champ magnétique modulé en amplitude. Le circuit intégré du jeton se sert de ce champ magnétique modulé pour s'alimenter. La réponse du jeton se fait par modulation du champ magnétique par l'antenne du jeton en fonction des informations caractéristiques stockées dans celui-ci.

Le moyen de mémorisation placé dans chaque jeton comporte une mémoire PROM contenant un numéro de série programmé lors de sa fabrication. On pourra par exemple choisir une mémoire PROM à programmation laser.

L'information caractéristique comporte donc un numéro de série. Elle peut également comporter la valeur faciale du jeton ou une information codée.

De façon plus précise le jeton est constitué d'une couronne métallique 2 et de deux flasques 5 et 6 concentriques avec la couronne et placées de part et d'autre de la couronne. L'une des deux flasques sert de support au circuit électronique. Le circuit peut être par exemple fixé à cette flasque par collage. Le circuit se trouve alors entre les deux flasques accolées. L'espace intérieur est rempli de résine 8.

On va maintenant décrire le procédé de fabrication du jeton selon l'invention.

Les flasques sont réalisées en matière plastique. La couronne est en métal ce qui permet d'avoir, outre la tenue mécanique, un tintement similaire à celui des pièces de monnaie.

On procède alors selon les étapes suivantes :
- découpe de plaques métalliques de manière à obtenir des couronnes de dimensions désirée.

Les flasques sont réalisées par injection thermoplastique. Le matériau utilisé est résistant aux chocs et à l'abrasion. Le polycarbonate, le polysulfone, le polytherimide éventuellement chargés de fibres de verre pourront, par exemple, être utilisés.

L'utilisation d'un thermoplastique permet d'obtenir différentes couleurs. Les jetons réalisés en couleur pourront être utilisés pour les machines à sous.

Un logo ou des inscriptions peuvent éventuellement être gravées dans le moule.

Le circuit intégré et l'antenne sont éventuellement fixés sur un substrat en verre epoxy.

On met ensuite en place une flasque 5 qui peut comporter un logement réservé à la mise en place du circuit électronique.

On peut prévoir de déposer une goutte de colle sur la flasque afin d'y fixer le circuit intégré et l'antenne réalisée par la bobine 4 ou le circuit oscillant 7.

On procède ensuite au dépôt d'une goutte de résine sur le circuit intégré et sur l'antenne.

On met en place la couronne métallique 2.

On met en place de la deuxième flasque 6.

On solidarise l'ensemble par une soudure par ultrasons, un clipsage ou un collage.

Enfin on peut procéder au test du jeton avant mise sur le marché.

## Revendications

1. Jeton de paiement électronique caractérisé en ce qu'il comporte un circuit électronique (3,4) à lecture sans contact et un ensemble de pièces mécaniques (2,5,6) solidaires composé de matériaux de natures différentes de façon à assurer une tenue mécanique au jeton, une protection physique du circuit et la lecture sans contact du circuit.

2. Jeton de paiement électronique selon la revendication 1 caractérisé en ce que l'ensemble de pièces comporte une pièce métallique (2) et deux flasques (5,6) en matériau transparent aux rayonnements électromagnétiques.

3. Jeton de paiement électronique selon la revendication 2 caractérisé en ce que la pièce métallique est une couronne.

4. Jeton de paiement électronique selon l'une quelconque des revendications précédentes caractérisé en ce que l'information caractéristique contenue dans le jeton est un numéro de série.

5. Jeton de paiement électronique selon la revendication 4 caractérisé en ce que l'information caractéristique comporte en outre la valeur faciale du jeton ou un codage de cette valeur.

6. Jeton de paiement électronique selon l'une quelconque des revendications précédentes caractérisé en ce que le circuit électronique (3,4) comporte un circuit intégré de mémorisation et des moyens d'émission/réception.

7. Jeton de paiement électronique selon la revendication 6 caractérisé en ce que les moyens d'émission/réception comportent un circuit oscillant (7).

8. Jeton de paiement électronique selon la revendication 6 caractérisé en ce que les moyens d'émission réception comportent une bobine d'inductance (4).

9. Jeton de paiement électronique selon la revendication 6 caractérisé en ce que les moyens de mémorisation comportent une PROM à programmation par laser.

10. Procédé de fabrication d'un jeton de paiement électronique selon l'une quelconque des revendications précédentes caractérisé en ce qu'il comporte les étapes suivantes :
- Elaboration d'une couronne métallique.
- Elaboration de deux flasques en matériau plastique.
- Mise en place du circuit électronique sur l'une des flasques.
- Dépôt d'une goutte de résine sur le circuit.
- Mise en place de la deuxième flasque.
- Solidarisation de l'ensemble des pièces.

11. Procédé de fabrication d'un jeton de paiement électronique selon l'une quelconque des revendications précédentes caractérisé en ce que la couronne est obtenue par frappe d'une plaque métallique.

12. Procédé de fabrication d'un jeton de paiement électronique selon l'une quelconque des revendications précédentes caractérisé en ce que les flasques sont obtenues par injection plastique.

13. Procédé de fabrication d'un jeton de paiement électronique selon l'une quelconque des revendications précédentes caractérisé en ce que les pièces sont solidarisées par soudure à ultrasons.
